# EUROPEAN PATENT APPLICATION

(11) **EP 2 608 106 A1**
(43) Date of publication of application: **26.06.2013**
(21) Application number: 11306748.2
(22) Date of filing: 22.12.2011
(51) Int. Cl.: G06K 9/00, G06F 17/30

(54) **Method and apparatus for face prioritization**

(71) Applicant: Thomson Licensing, 92130 Issy-les-Moulineaux (FR)
(72) Inventor: Gaedke, Klaus, 30659 Hannover (DE); Glaeser, Frank, 30449 Hannover (DE); Weber, Michael, 30559 Hannover (DE); Li, Hui, 30539 Hannover (DE)
(74) Representative: Schmidt-Uhlig, Thomas

(57) **Abstract**

A method for determining a priority value for objects in a video stream is proposed, wherein the method does not only consider single pictures independently from each other but also considers the dynamics in a scene or shot when considering the correlation between the consecutive pictures. Objects are detected in a number of consecutive pictures of the video stream. Next, identical objects in multiple consecutive pictures of the video stream are identified. A priority value is assigned to each object of the video stream, wherein an object which is detected in multiple consecutive pictures of the video stream gets a higher priority value than an object which is only rarely detected in the multiple consecutive pictures of the video stream. The priority value is stored in the metadata of the video stream at the corresponding point in time.

## Description

The invention relates to a method and an apparatus for prioritizing faces and/or other objects which are detected in an audio/video stream.

Today huge amounts of data are available in libraries, archives and databases. For easier use of these huge amounts of data, there is a trend to apply metadata for categorizing, searching, and indexing the data which makes it easier for a user to identify specific content or to navigate in video data to specific scenes of interest. In many video sequences one of the meaningful contents a user is interested in are the faces of acting persons and metadata related to these persons, e.g. names or relationship to others. Thus, face detection is well known in the art and widely used for analyzing video content.

In this regard, US 7,916,894 discloses a method for generating a summary of a video using faces. A plurality of sets of face images associated with a video is obtained, where each set of face images corresponds to a particular person depicted in the video. Of the person associated with the plurality of sets of face images, one or more of those persons are selected to be included in a facial summary by analyzing the plurality of sets of face images and/or the video. The determination which faces to include in the summary is based on the number of times that a face appears in the video, a face size, or an importance of a face. Though this approach allows to assign a certain priority to the detected faces, it only constitutes an inchoate solution for prioritizing faces by only using static information of pictures and thus, not using all information available with regard to a face.

Face recognition is mostly realized based on self-learning systems and is thus for some types of video formats, especially for news programs, not usable. In this case, the amount of persons which must be classified exceeds the possibilities of such a system. Another problem is that unknown persons appear permanently in news programs. They cannot be immediately detected by such a system without a long learning phase. The current practice in this case is therefore to annotate faces manually. Here, an automatic prioritization is very useful to support the manual annotation work.

The above mentioned teaching relies on independent pictures in a video content and thus does not use the dynamics within a video. It is thus an object of the present invention to propose an improved solution for prioritizing faces.

According to the invention, a method for determining a priority value for objects in a video stream consisting of successive pictures is proposed, wherein the method does not only consider single pictures independently from each other but also considers the dynamics in a scene or shot when considering the correlation between the consecutive pictures. The succession rate of the video stream is such that a moving video can be reproduced usually for TV: 25/30 pictures per second, also multiple of these such as 50/60 or 100/120 pictures per second are possible. On low quality external receiver devices also lower rates as 12/15 or 6/8 pictures per second are possible. For certain aspects as for video surveillance even lower rates might be acceptable and thus implemented. Objects are detected in a number of consecutive pictures of the video stream. Objects might be detected in each picture of a part of the stream or in a subset of these pictures. The subset is e.g. consisting of pictures in a regular distance, e.g. in each second, third or tenth picture or the like. Another way is to detect objects in each I frame for example in the case of an MPEG compressed stream. Other subsets of pictures wherein objects are detected are possible. Such subsets are preferably adopted to specific characteristics of other compression schemes or to other appropriate criteria. Next, identical objects in multiple consecutive pictures of the video stream are identified. A priority value is assigned to each object of the video stream, wherein an object which is detected in multiple consecutive pictures of the video stream gets a higher priority value than an object which is only rarely detected in the multiple consecutive pictures of the video stream. The priority is defined either by the absolute time a face appears that is to say the number of consecutive pictures in which the face is present or the relative time a face is present in the whole move, a scene or a shot. An object which is only detected in one picture gets no priority value or a low priority value assigned to it. The priority value is stored in the metadata of the video stream at the corresponding point in time. The method according to the invention has the advantage that multiple pictures in time are used to assign a priority value to a certain object and not only a single independent picture. Thus, the method is able to take changes of the objects to which a priority value is assigned into account, which makes the method more reliable and offers better results. The invention supports semi-automatic annotation of film or video sequences by automatically identifying the most important objects. Advantageously, camera work is used for defining the priority value. The expression camera work as used here in fact covers the thoughts of a camera operator and when analyzing the video stream, also the work of the stage director is covered. This might be done by assigning a high priority value to objects which become bigger in a number of consecutive pictures, which represents a zoom-in onto these objects, indicating a certain importance of these objects. On the other hand, objects which become smaller in a number of consecutive pictures, which represents a zoom-out from these objects, indicating a lower priority of these objects.

Advantageously, the objects which are kept in the center during a number of consecutive pictures get a high priority value assigned to them. Also a priority can be assigned according to the movement of the object in the picture form a less important area to a more important area. Also a certain importance and thus a high priority value is applied to objects which are identified in many consecutive pictures with changing backgrounds. If an object is identified in front of changing backgrounds, the object is present in different scenes and potentially is a main object in the video stream. Thus, a high priority value is assigned.

Favorably, the objects in the video stream which get a priority value assigned to them are faces which are detected in the video stream by face detection.

Advantageously, an apparatus for determining a priority value for objects in a video stream is adapted to perform a method as described above for determining the priority values.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates a method according to the invention,

- Fig. 2: schematically illustrates an apparatus adapted to perform the method of Fig. 1,
- Fig. 3: shows an example of analyzed pictures according to the method of Fig. 1.

In the following the invention shall be explained for analyzing and applying priority values to faces within video data. Of course, the invention is not limited to the priority of faces but also covers other objects present in video data.

The inventive method is also applicable to other objects that can be detected using a certain detection criteria, as e.g. cars (e.g. racing cars), animals (e.g. racing horses), human beings (e.g. football players, soccer players, baseball players etc.).

For the semi-automatic annotation of film and video material, automatic face detection is an important technology brick. The face detection and highlighting of detected faces within the scene helps the annotator to do his job. However, a reliable prioritization of the detected faces eases the job of manual annotation even further and is a necessary step more for fully-automatic annotation.

The proposed invention is based on the fact that the camera work is normally used to guide the attention of the viewer to the important parts of the displayed scene. If many persons are visible, the camera work will highlight the most important one or the group of most important ones. In order to achieve that, this person or these persons will be either displayed near the center of the screen or the camera follows that single person or the person group.

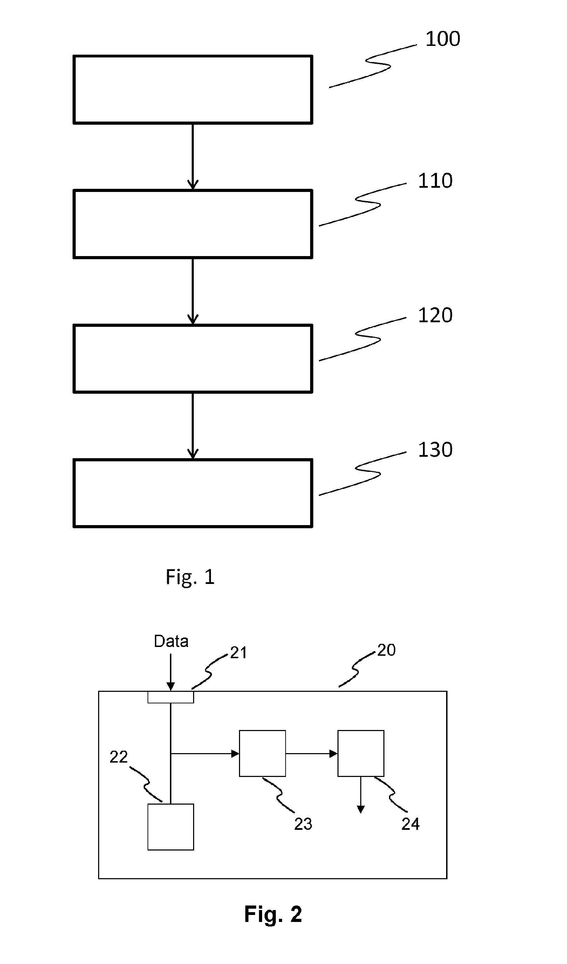

Fig. 1 illustrates a method according to the general idea of the invention. Objects of interests are detected in a number of consecutive pictures in a first step 100. For example, these objects are detected in each picture of a movie, which is present as e.g. an MPEG stream. Alternatively, objects might be detected in a certain interval, e.g. in each second, third or tenth picture or the like. Another way is to detect objects in each I frame for example in the case of an MPEG stream. In step 110, identical objects are identified in a number of pictures which have been used for object detection. In step 120, a priority value is assigned to the detected objects, wherein objects being present in consecutive pictures are considered to be important and objects which are detected only rarely are considered less important. Objects which are detected the first time in a picture get a low priority value or no priority value assigned to them. For the priority assignment, also the appearance of the objects is considered to incorporate the dynamics of a video stream. Thus, objects which become bigger in multiple consecutive pictures are considered to have a high priority, as the camera is probably zooming onto these objects. This clearly indicates that the producer of the film or video material wants to direct the attention of the viewer to this object. Objects which become smaller in multiple consecutive pictures are considered to have lower priority, as the camera is zooming out. Further, objects in the center indicate higher priority than objects at the border of the picture. It is detected if the camera follows an object or a group of objects. The global motion of the scene is measured and compared to the motion of the detected objects. The objects changing the position within the scene only marginally in spite of a global motion of the complete scene are the most important ones and get high priority value assigned to them. In step 130, the priorities of the objects are stored in the metadata of a video stream. Thus, depending on the camera work, the priority of the same objects might also change. This might be the case e.g. in a talkshow, when a zoom is made onto a person which explains an argument, and afterwards, the camera zooms out and zooms onto another person which provides a counterargument. In this case, the priority value of the person changes accordingly.

Fig. 2 schematically illustrates an apparatus 20 adapted to perform the method of Fig. 1. The apparatus has an input 21 for receiving data. Alternatively or in addition, data may be provided from a storage device 22, e.g. a harddisk or a device for playback of removable storage media. An object detection unit 23 detects the objects of interest in a number of consecutive pictures. These objects can be faces or other objects. In case faces are analyzed, the object detection unit 23 is a face detector. The information about detected objects is provided to an analyzing unit 24, which performs analysis, e.g. identifies identical faces in multiple consecutive pictures. Further, the analyzing unit 24 takes the dynamics of multiple consecutive pictures into account. This is done by analyzing the camera work and background of the pictures to extract data from which a priority of the objects is derivable according to the described method. The output of the analyzing unit 24 is the object priority value which is then written to the metadata of the video.

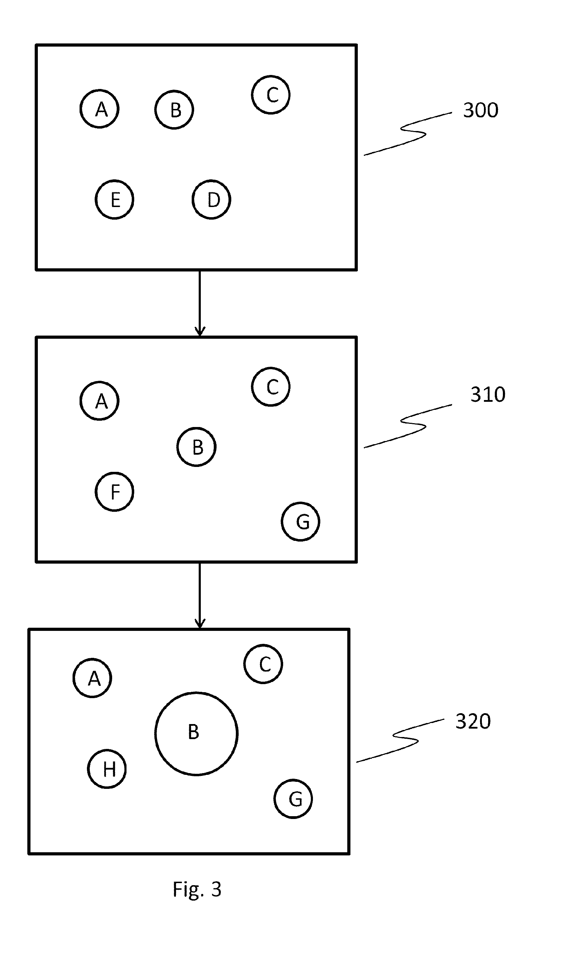

Fig. 3 depicts an example of analyzed pictures according to the method of Fig. 1. In picture 300, five objects A, B, C, D, E are detected, which are e.g. faces of five different actors. They all have the same size, there is no object especially in the center and thus a static prioritizing method would hardly be able to assign priorities to these object. In the next consecutive picture 310, which is analyzed, the objects A, B, C are detected again. The objects D, E disappeared. Thus, the method according to the invention would not assign a priority value a assigns a low priority value to the objects D, E, as they are not detected in multiple consecutive pictures. If the objects D, E had been detected before, the priority value would decrease in this case. Object B moved from an outer position in picture 300 to a central position in picture 310. This movement of object B implicated that the object has a certain importance for the scene. Thus, the priority value of this object will be set higher as the priority value of objects A, C, F, G. As objects F and G appear the first time, no priority value or a low priority value is assigned to these objects. As objects A and C appeared in the picture 300 before, they get a priority value which is lower than the priority value of B but higher than the priority value of F and G. In picture 320, the object B is even bigger as in picture 310. This means that the camera focuses and zooms onto this object or this object got in the foreground of the scene. This leads to the assignment of an even higher priority value to this object. On the other hand, as object F disappeared, which was visible in picture 310, this object is considered of low priority and a low priority value is assigned to it. This low priority value is also assigned for object F with regard to picture 310.

## Claims

1. A method for determining a priority value for objects (A, B, C, D, E, F, G, H) in a video stream consisting of successive pictures, the method **comprising** the steps of:
- detecting objects (A, B, C, D, E, F, G, H) in a number of consecutive pictures (300, 310, 320) of the video stream;
- identifying identical objects (A, B, C, D, E, F, G, H) in multiple consecutive pictures (300, 310, 320) of the video stream;
- assigning a priority value to each identified object (A, B, C, D, E, F, G, H) of the video stream, wherein an object (A, B, C) which is detected in multiple consecutive pictures (300, 310, 320) of the video stream gets a higher priority value than an object (E, D, F, G, H) which is only rarely detected in the multiple consecutive pictures (300, 310, 320) of the video stream;
- and storing the priority value into the metadata of the video stream.

2. The method according to claim 1, **wherein** camera work is used for defining the priority value.

3. The method according to claim 1 or 2, **wherein** objects which become bigger in a number of consecutive pictures get a high priority value assigned to them.

4. The method according to claim 2 or 3, **wherein** objects which become smaller in a number of consecutive pictures get a low priority value assigned to them.

5. The method according to one of claim 2 to 4, **wherein** objects which are kept in the center during a number of consecutive pictures get a high priority value assigned to them.

6. The method according to one of claim 2 to 5, **wherein** objects which are identified in many consecutive pictures with changing backgrounds get a high priority value assigned to them.

7. The method according to one of claim 2 to 6, **wherein** objects in the video stream which get a priority value assigned to it are faces which are detected in the video stream by face detection.

8. The method according to one of claim 2 to 7, **wherein** stage directions are extracted from the multiple consecutive pictures of the video stream and are used to identify identical objects in multiple consecutive pictures of the video stream.

9. An apparatus for determining a priority value for objects in a video stream, **characterized in that** the apparatus is adapted to perform a method according to one of claim 1 to 8 for determining the priority values.
